(19)

Europäisches
Patentamt

European
Patent Office

Office européen
des brevets

(11) **EP 2 200 320 A1**

(12) **EUROPEAN PATENT APPLICATION**

(43) Date of publication:
**23.06.2010 Bulletin 2010/25**

(51) Int Cl.:
***H04N 7/26*** (2006.01)

(21) Application number: **08305972.5**

(22) Date of filing: **18.12.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Thomson Licensing
92443 Issy-les-Moulineaux Cedex (FR)**

(72) Inventors:
• **Xu, Long
100085 Beijing (CN)**

• **Li, Jun
100085 Beijing (CN)**
• **Liao, Ning
100085 Beijing (CN)**

(74) Representative: **Rittner, Karsten
Deutsche Thomson OHG
European Patent Operations
Karl-Wiechert-Allee 74
30625 Hannover (DE)**

(54) **Method and apparatus for two-pass video signal encoding using a sliding window of pictures**

(57) In known video encoding rate control processing where both the bit rate control and the HRD buffer requirement are taken into account, drops or changes in video quality will occur. According to the invention, a two-pass rate control processing is performed in which, for adapting the input to the second pass encoding (17), the QPs are smoothed (12) within a sliding window of frames, whereby the QPs are adjusted (13) such that the resulting total number of allocated bits does not exceed a target number of available bits for the encoding of the pictures belonging to said current window, and based on these smoothed and adjusted quantisation parameter values, the quantisation parameter values are further adjusted (15, 16) so as to match the encoder or decoder buffer constraint for a current picture in the current window.

**Fig. 1**

EP 2 200 320 A1

**Description**

The invention relates to a method and to an apparatus for two-pass video signal encoding, wherein the output of the first pass is adapted within a sliding window of pictures for a following second-pass encoding.

Background

For a video coding/streaming application, some pre-defined constraints on buffer management should be provided in order to prevent a video decoder from underflow, causing occurrence of display jitter and degrading the viewing experience. In the H.264/AVC video coding standard, these constraints are formulated by the description of a hypothetic reference decoder (HRD), cf. JVT of ISO/IEC MPEG & ITU-T VCEG, "HRD and Related Issues", Doc. JVT-D131, 22-26 July 2002, and JVT of ISO/IEC MPEG & ITU-T VCEG, "Time-shift Causality Constraint on the CAT-LB HRD", Doc. JVT-E133, 9-17 October 2002.

A HRD operates according to a set of transmission rate and buffer parameters $(R,B,F_d)$ for a given bit stream. $R$ is the peak transmission bit rate, $B$ is the buffer size, and $F_d$ is the initial decoder buffer fullness. The video bit stream is received and stored into the decoder buffer until the buffer fullness reaches the initial decoder buffer fullness. As soon as that status is reached, the decoder will start decoding, and will display each frame of the video sequence at subsequent time intervals. Correspondingly, the start-up (buffer) delay or initial decoding delay is $T_d = F_d/R$.

Given the channel bit rate and encoded video bit stream data, the minimum initial decoder buffer fullness and the minimum buffer size can be calculated. The minimum buffer size corresponds to the minimum delay from the encoder to the decoder (i.e. the end-to-end delay). Or alternatively, if a video sequence is encoded compliant with the HRD constraints $(R,B,F_d)$, the scheduling (i.e. arrival time, removal time and decoding delay) of each frame can be deduced directly. For CBR (constant bit rate) transmission, the encoder buffer fullness and the decoder buffer fullness are complementary, as described in J. Ribas-Corbera et al., "A generalized hypothetical reference decoder for H.264/AVC", IEEE Transactions on Circuits and Systems for Video Technology, July 2003.

In H.264/AVC, the HRD employs a CAT-LB (constraint arrival time-leaky bucket) model for timing of bits arrival and removal associated with a picture from a pre-decoder buffer. The CAT model imposes a causality constraint on the arrival time of encoded bits to the pre-decoder buffer.

In JVT of ISO/IEC MPEG & ITU-T VCEG, "Proposed Draft of Adaptive Rate Control", Doc. JVT-H017, 20-26 May 2003, the HRD is firstly integrated into the encoder rate control by imposing basic buffering constraints on the bit rate variations of a video bit stream. Specifically, the buffer constraint is considered in the bit allocation, wherein bits quota allocated for a current frame is determined not only by the complexity of the current frame but also by the current buffer fullness of the encoder. The buffer status is checked for each frame in the encoding process. If the buffer fullness at the time of encoding the current frame exceeds a predefined threshold, the bits quota for the current frame should be reduced, which may lead to a significant variation of the resulting picture quality.

The buffer constraints in the bit allocation of H.264/AVC are also performed at the frame level. As a result, much less or much more bits may be allocated to a frame due to the abrupt variation of the buffer occupancy which, in turn, leads to a significant variation of the resulting picture quality.

Invention

In known rate control algorithms where both the bit rate control and the HRD buffer requirement are taken into account, drops or changes in video quality will result in a poor viewing experience.

A problem to be solved by the invention is to maintain the resulting image quality as uniform as possible while still satisfying the target bit rate and HRD buffer constraints. This problem is solved by the method disclosed in claim 1. An apparatus that utilises this method is disclosed in claim 2.

According to the invention, a two-pass rate control processing is performed in which, for adapting the input to the second pass encoding, a new R-D (Rate-Distortion) model and corresponding scene-dependent parameters are used for achieving a better encoding performance. In particular, following the first-pass encoding performing a known CBR rate control, for the second-pass encoding a statistical R-D model is used that is based on the actual complexities of the video frames and that can provide a smoother QP (Quantisation Parameter, i.e. degree of quantisation) variation, whereby a good match between the real bit rate and the target bit rate can be obtained. However, in such second-pass encoding with the purpose of smoothing the QP variation, the bit stream compressed with the smoothed QPs derived from the statistical R-D model may not comply with the given buffer constraint. Therefore a sliding window-based buffer status or fullness check processing is used, wherein 'window' means a group of adjacent video frames.

In order to achieve a smooth QP variation and to simultaneously satisfy HRD constraints in the second-pass encoding, a sliding window-based QP smoothing and adjustment processing and a sliding window-based HRD buffer checking processing are performed, wherein the QP value variation is smoothed or reduced by a filtering of the corresponding QP values (in particular) in temporal direction. In a further embodiment, to a same block/macroblock position in all frames of the current window the same QP value can be applied, i.e. the QP values for the blocks/macroblocks in the first frame of the window are applied to the corresponding blocks/macroblocks in all frames of the current window.

In a bits pre-allocation step or stage applied to the first-pass encoding output signal, the bits are allocated within a window that covers a segment of several frames. The bits exceeding the buffer constraint are compensated among all frames belonging to that window, which processing is different from reducing the bits budget of only one frame. The resulting QPs are applied to the blocks or macroblocks of the frames belonging to the same sliding window. Advantageously, thereby a good trade-off between buffer constraint and smooth QP variation can be achieved. The instantaneous buffer occupancy at the time of encoding each frame is considered in the encoding stage, and the sliding window will move forward by one frame each time.

Thereby an encoded video bit stream can be generated that has a smooth picture quality and is compliant with both target bit rate constraint and buffer constraint.

In principle, the inventive method is suited for two-pass video signal encoding, wherein in a first pass a constant bit rate encoding is carried out, the output of which is adapted for a following second-pass encoding, wherein said adaptation is carried out based on a sliding window of adjacent pictures and wherein in a current window:

- the quantisation parameter values as calculated in the first pass encoding for the coding blocks or macroblocks are smoothed at least in temporal direction and are adjusted at window level, such that the resulting total number of allocated bits does not exceed a target number of available bits for the encoding of the pictures belonging to said current window;
- based on the smoothed and adjusted quantisation parameter values, further adjusting these quantisation parameter values upon checking the actual encoder or decoder buffer constraint for a current picture in said current window;
- based on the resulting quantisation parameter values, second-pass encoding said video signal so as to provide a correspondingly encoded video signal.

In principle the inventive apparatus is suited for two-pass video signal encoding, wherein in a first pass a constant bit rate encoding is carried out, the output of which is adapted for a following second-pass encoding, wherein said adaptation is carried out based on a sliding window of adjacent pictures, said apparatus including:

- means being adapted for smoothing the quantisation parameter values for the coding blocks or macroblocks as calculated in the first pass encoding at least in temporal direction and for adjusting them at window level, such that the resulting total number of allocated bits does not exceed a target number of available bits for the encoding of the pictures belonging to said current window;
- means being adapted for, based on the smoothed and adjusted quantisation parameter values, further adjusting these quantisation parameter values upon checking the actual encoder or decoder buffer constraint for a current picture in said current window;
- means being adapted for, based on the resulting quantisation parameter values, second-pass encoding said video signal so as to provide a correspondingly encoded video signal.

Advantageous additional embodiments of the invention are disclosed in the respective dependent claims.

Drawings

Exemplary embodiments of the invention are described with reference to the accompanying drawings, which show in:

Fig. 1    inventive two-pass rate control processing using an adapted statistical R-D model and a sliding window-based QP smoothing and buffer checking mechanism;
Fig. 2    simplified block diagram of the inventive encoder;
Fig. 3    more detailed sliding window-based QP smoothing and adjustment with the inventive R-D Model.

Exemplary embodiments

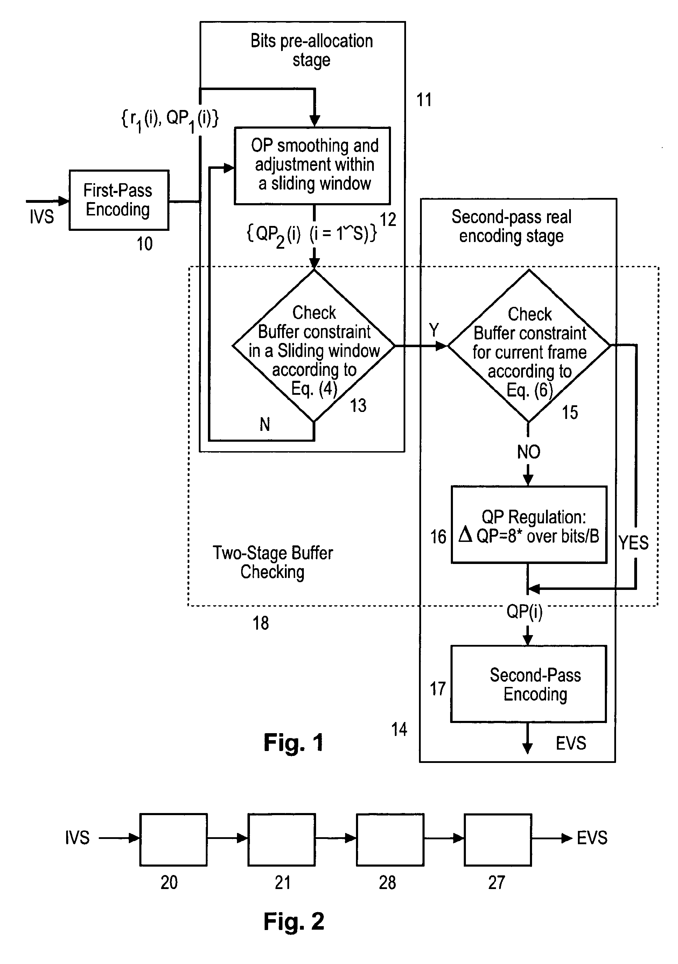

The inventive processing is shown in Fig. 1. In the first-pass encoding 10 a known CBR rate control is performed to the input video sequence IVS in order to yield a bit stream whose bit rate matches the target bit rate well. However, this output bit stream may have a significant image quality fluctuation in temporal direction. Therefore, in a first step or stage 12 within a bits pre-allocation step/stage 11, the QPs as calculated in the first pass encoding are smoothed (at least) in temporal direction at window level for the coding blocks or macroblocks of adjacent pictures that form an S-frame length sliding window. The QPs are smoothed by applying a smoothing filter (a low-pass filter, e.g. a Gaussian filter) under the (desired) constraint that the total number of allocated bits does not exceed the target number of bits (i.e. the available bits) for the window. In step or stage 13, a sliding window based HRD buffer constraint is checked in order to prevent the decoder buffer from underflow. In case the corresponding buffer constraint represented by equation (4) is not satisfied, the QPs of the frames in the window are re-adjusted in step/stage 12, i.e. in case the resulting bit rate is too high the quantisation is made coarser, thereby reducing the number of available bits and in turn increasing the QP values. Otherwise, the current (filtered) QPs will be used in the second-pass encoding 14 for encoding the corresponding frames. In the second-pass encoding 14, before the actual encoding of the current frame with its QPs obtained in the bits pre-allocation 11 in a known second-pass encoding step/stage 17, the actual buffer fullness is checked in step or stage 15 according to equation (6) for ensuring that the decoder buffer will not underflow. Regarding buffer checking, unlike in step/stage 13 where the number of expected bits are used, in the buffer checking in step/stage 17 the actual bits of the frames that have been coded by the second-pass encoding are used. In case the buffer constraint represented by equation (6) is not satisfied, the QPs of the current frame are adjusted in step or stage 16 according to empirical equation (1), and are thereafter used for encoding the current frame in step/stage 17 that outputs the encoded video sequence EVS:

$$\Delta QP = 8*overbits/B , \tag{1}$$

wherein *'overbits'* is the number of bits that causes the buffer overflow in equation (6).

In the second-pass encoding step/stage 17, the buffer status is updated according to the actual number of bits spent for each frame. Thus, a two-stage buffer checking 18 is involved in the inventive two-pass rate control processing. In the first stage of checking 18 (i.e. in 13), the QP smoothing and adjustment is iteratively performed on a group of frames representing a sliding window, until the buffer constraint according to equation 4 is satisfied, wherein the buffer checking is based on the number of pre-allocated bits for each frame. In the second stage of checking 18 (i.e. in 15 and 16), with the progress of actual encoding, the actual buffer fullness is used for checking the buffer constraint.

The HRD buffer constraint within a sliding window is described as follows. In real-operation applications, the discrete formula of the buffer occupancy $B_e$ of the encoder can be represented as:

$$B_e(j) = \sum_{i=j-S}^{j-1} \max\left(0, r(i) - R_o(i)\right) + r(j) , \tag{2}$$

wherein $r(i)$ is the number of bits of the $i$-th encoded frame from the encoder, $S$ is the size in frames of the sliding window, and $R_o(i)$ is the number of output bits of the encoder when the $i$-th frame is processed. Due to the CAT constraint of the VBR encoding, $R_o(i)$ is defined as

$$R_o(j) = \begin{cases} 0 & j < Te \times Fr; \\ \min\{R_c / Fr, Be(j-1)\} & j \geq Te \times Fr; \end{cases} \tag{3}$$

wherein $T_e$ is the encoder initial delay which together with the decoder initial delay $T_d$ constitutes the end-to-end delay, $R_c$ is the average transmission bit rate of the channel, and $F_r$ is the frame rate. When simulating the invention, $S$ was set to the number of frames delayed corresponding to the encoder initial delay $T_e$.

Given the minimum buffer size $B$ and the initial decoder delay $T_d$ of an application, the encoded bit stream without decoding buffer underflow can be derived from the encoder by controlling the number of output bits of each frame in order to satisfy the constraint of no encoder buffer overflow, that is for $\forall j$, $B_e(j) \leq B$. In the first-stage buffer checking, the condition without encoder buffer overflow (i.e. decoder buffer underflow) can be represented as

$$\sum_{i=j-S}^{j-1} \max\left(0, r_{2,\exp ect}(i) - R_o(i)\right) + r_{2,\exp ect}(j) < B , \tag{4}$$

wherein $r_{2,expect}(i)$ is the number of target bits of the $i$-th frame after QP smoothing and adjustment in step/stage 12.

Because $\{r_1(i), QP_1(i)\}$ can be obtained after the first-pass rate control, $r_{2,expect}(i)$ can be calculated according to the statistic R-D model given by

$$r_{2,\exp ect}(i) = k\left(r_1(i) \times QP_1(i)\right)^p \Big/ QP_2(i) \quad , \qquad (5)$$

wherein $QP_1(i)$ is the QP of $i$-th frame after first-pass encoding; $QP_2(i)$ is the QP of $i$-th frame after QP smoothing and adjustment in step/stage 12, $k$ and $p$ are scene-dependent factors. This model serves for obtaining a 'constant' perceived quality by taking bits from the encoding of the easier scenes and putting them into the encoding of the more complex scenes. In our simulating system, $k$ is always '1' and $p$ is 0.43 for I and P frames and 0.46 for B frames.

A QP assigned to a specific block or macroblock in a frame while belonging to an earlier window may be different to the QP assigned to the same block or macroblock in the same frame while belonging to a current window. In such case that block or macroblock in the frame takes the larger QP value of both (i.e. a coarser quantisation is performed), in order to satisfy the decoder buffer constraint.

In the second-stage buffer checking 15, the buffer occupancy is updated with the actual bits generated for the encoding of preceding frames. The condition without encoder buffer overflow (i.e. decoder buffer underflow) is represented as:

$$\sum_{i=j-S}^{j-1} \max\left(0, r_{2,actual}(i) - R_o(i)\right) + r_{2,\exp ect}(j) < B \quad , \qquad (6)$$

In Fig. 2 the input video sequence IVS passes through a known CBR rate control first-pass encoder 10 to a bits pre-allocation stage 21 the function of which is described above (see 11). Its output signal passes through a buffer constraint checker and QP regulator 28 (the function of which is described above, see 15 and 16) to a known second-pass encoder 27 that outputs the encoded video sequence EVS.

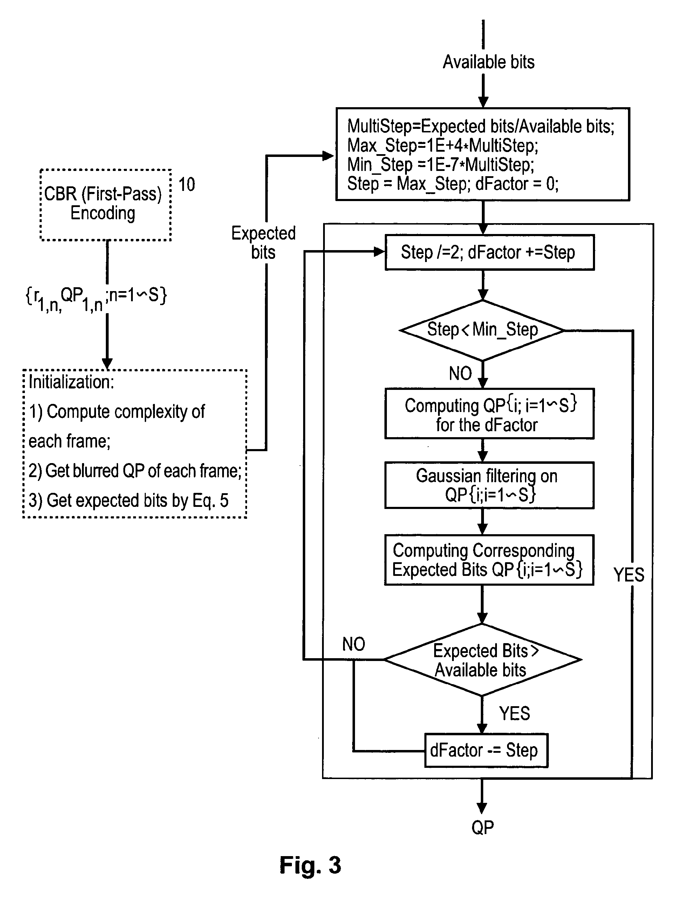

A more detailed processing that can be carried out in the QP smoothing and adjustment within the sliding window (e.g. step/stage 12 in Fig. 1) is shown in Fig. 3. The inputs include number of 'Expected bits' and number of 'Available bits', and the output of the processing is a group of QP values.

The number of available bits is the upper bound of constraint bits of the encoder without buffer overflow, which number is calculated from the encoder buffer fullness and channel bandwidth as:

$$R_a(i) = F_d(i-1) + R_c \times S \quad , \qquad (7)$$

wherein $R_a(i)$ represents the number of available bits of the $i$-th sliding window containing $S$ frames and $F_d(i)$ is the buffer fullness of the decoder when the i-th sliding window is processed.

Following the first-pass encoding 10, the degree of complexity of each frame is computed, the initial QPs of the frames in a sliding window are filtered and become blurred QPs of each frame, and the number of expected bits is derived from the current QPs employing the R-D model (equation 5).

A bisection method can be used to find a set of QPs corresponding to the number of available bits. Specifically, from the quotient 'number of expected bits'/'number of available bits' a minimum and a maximum step size are derived. Initially a parameter 'step' is set to the maximum step size and a parameter 'dfactor' is set to zero. The variable 'dfactor' is an intermediate variable used in the bisection search method, and is essentially the ratio of 'expected bits' to 'available bits'. The purpose of the bisection search method is to find a suitable ratio (i.e. 'dfactor') such that the 'expected bits' > 'available bits'. Note that here 'expected bits' means a temporary variable that does not have the same value as the input number 'expected bits' used during the iteration in Figure 3 where the input 'expected bits' is the number of bits of each frame following the first pass encoding. In a following loop, 'step' is divided by '2' and 'dfactor' is increased by 'step' until 'step' < 'minimum step size'. If not true, based on the current 'dfactor' the QPs for the sliding window are calculated and thereafter filtered, followed by computing the related number of expected bits. In case 'number of expected bits'>'number of available bits' is not true, the loop continues. Otherwise, 'dfactor' is decreased by 'step', and the loop continues. In case 'step' < 'minimum step size', the loop stops and the revised *set of QPs* is output.

With the iterative process of Fig. 3, a set of adapted QPs corresponding to the number of available bits can be obtained for the current sliding window. In case of negative output of step/stage 13 in Fig. 1 the iterative process of the calculation of the QPs is introduced. As an example, the number of available bits decreases by 5 percent for each iteration. I.e., if a decoder buffer underflow is going to happen with the calculated quantisation parameter values for a current sliding window, the number of available bits is decreased by a predetermined value or percentage, which in turn leads to the increased quantisation parameter via the process described in connection with Fig. 3.

A constant video quality results from both filtering and usage of the R-D model shown in equation (5). Experiments have shown that applying a constant QP to video sequence encoding will generally results in a constant video quality. Therefore the smoothing of the QP values by low-pass filtering contributes to constant video quality. The reason that the R-D model also contributes to constant video quality is as follows. The inventive R-D model is built based on the results of the first-pass encoding and incorporates some scene-dependent parameters, i.e. is used for the adaptation. That is, the complexity of each frame is pre-known and is reflected in the R-D model. Therefore, using that R-D model helps allocating a proper number of bits to a frame according to its scene complexity, which also contributes to constant video quality.

If considering video streaming applications with flexible channels, such as a wireless data network for transmitting video streaming, they can work intermittently beyond the target bit rate although the long-term average bit rate will be very close to the target bit rate. I.e., the peak bit rate of a video channel is larger than its long-term average bit rate. This property can be utilised for transmitting large volume frames which can not arrive at the decoder in time under the average channel rate. In fact, the main factors for improving the picture quality according to the invention are the above-described two-pass rate control algorithm, the flexible channel property, and the smooth buffer controlling mechanism.

Due to the window-of-frames based processing, the invention provides the further advantage that the response time is reduced as compared to known two-pass video coding processings wherein the encoding result is acquired only after completing the two-pass encoding over the whole video sequence.

A typical application of the invention is the VBR encoding for TV broadcasting applications over wireless data networks. The goal is to obtain a VBR video stream with smooth quality under the constraints of delay requirements for a TV application. The first-pass encoding is a conventional CBR rate control for a target average bit rate. The second-pass encoding produces a VBR bit stream with smooth picture quality, while the bit output conforms to the given buffer requirements.

The invention can be used in video streaming applications, such as internet, intranet peer to peer network, IPTV, TV program.

The video signal encoded according to the invention can be stored on a storage medium, for example an optical disc or hard disc.

## Claims

1. Method for two-pass video signal (IVS) encoding, wherein in a first pass (10, 20) a constant bit rate encoding is carried out, the output of which is adapted (11, 14; 21, 28) for a following second-pass encoding (17), **characterised in that** said adaptation is carried out based on a sliding window of adjacent pictures, wherein in a current window:

   - the quantisation parameter values (QP) as calculated in the first pass encoding (10, 20) for the coding blocks or macroblocks are smoothed (12, 21) at least in temporal direction and are adjusted (13, 21) at window level, such that the resulting total number of allocated bits does not exceed a target number of available bits for the encoding of the pictures belonging to said current window;
   - based on the smoothed and adjusted quantisation parameter values (QP), further adjusting (15, 16; 28) these quantisation parameter values upon checking the actual encoder or decoder buffer constraint for a current picture in said current window;
   - based on the resulting quantisation parameter values (QP), second-pass encoding (17, 27) said video signal so as to provide a correspondingly encoded video signal (EVS).

2. Apparatus for two-pass video signal (IVS) encoding, wherein in a first pass (10, 20) a constant bit rate encoding is carried out, the output of which is adapted (11, 14; 21, 28) for a following second-pass encoding (17), wherein said adaptation is carried out based on a sliding window of adjacent pictures, said apparatus including:

   - means being adapted for smoothing (12, 21) the quantisation parameter values (QP) for the coding blocks or macroblocks as calculated in the first pass encoding (10, 20) at least in temporal direction and for adjusting (13, 21) them at window level, such that the resulting total number of allocated bits does not exceed a target number of available bits for the encoding of the pictures belonging to said current window;

- means being adapted for, based on the smoothed and adjusted quantisation parameter values (QP), further adjusting (15, 16; 28) these quantisation parameter values upon checking the actual encoder or decoder buffer constraint for a current picture in said current window;
- means being adapted for, based on the resulting quantisation parameter values (QP), second-pass encoding (17, 27) said video signal so as to provide a correspondingly encoded video signal (EVS).

3. Method according to claim 1, or apparatus according to claim 2, wherein said smoothing is performed by filtering (12) the corresponding quantisation parameter values (QP) in temporal direction.

4. Method according to claim 1 or 3, or apparatus according to claim 2 or 3, wherein said filtering (12) is a low-pass filtering or a Gaussian filtering.

5. Method according to one of claims 1, 3 and 4, or apparatus according to one of claims 2 to 4, wherein the size $S$ of said sliding window is $S = T_e * F_r$ and $T_e$ is the initial delay of the encoder and $F_r$ is the frame rate.

6. Method according to one of claims 1 and 3 to 5, or apparatus according to one of claims 2 to 5, wherein said second-pass encoding is a variable bit rate encoding.

7. Method according to one of claims 1 and 3 to 6, or apparatus according to one of claims 2 to 6, wherein, if a decoder buffer underflow is going to happen with the calculated quantisation parameter values for a current picture, the quantisation parameter values for said current frame are increased by a predetermined value or percentage.

8. Digital video signal that is encoded according to the method of one of claims 1 and 3 to 7.

9. Storage medium, for example an optical disc, that contains or stores, or has recorded on it, a digital video signal according to claim 8.

Bits pre-allocation
stage

11

$\{r_1(i), QP_1(i)\}$

OP smoothing and
adjustment within
a sliding window

Second-pass real
encoding stage

IVS → First-Pass
Encoding

10

$\{QP_2(i) \ (i = 1{\sim}S)\}$    12

Check
Buffer constraint
in a Sliding window
according to
Eq. (4)

13

N

Y

Check
Buffer constraint
for current frame
according to
Eq. (6)

15

NO

16    QP Regulation:
$\Delta$ QP=8* over bits/B

YES

Two-Stage Buffer
Checking

18

QP(i)

17    Second-Pass
Encoding

14

EVS

**Fig. 1**

IVS → [ 20 ] → [ 21 ] → [ 28 ] → [ 27 ] → EVS

**Fig. 2**

Available bits

MultiStep=Expected bits/Available bits;
Max_Step=1E+4*MultiStep;
Min_Step =1E-7*MultiStep;
Step = Max_Step; dFactor = 0;

CBR (First-Pass)
Encoding    10

$\{r_{1,n,}QP_{1,n};n=1\sim S\}$

Initialization:
1) Compute complexity of
each frame;
2) Get blurred QP of each frame;
3) Get expected bits by Eq. 5

Expected
bits

Step /=2; dFactor +=Step

Step < Min_Step

NO

Computing QP{i; i=1∼S}
for the dFactor

Gaussian filtering on
QP{i;i=1∼S}

Computing Corresponding
Expected Bits QP{i;i=1∼S}

NO    Expected Bits >
Available bits

YES

dFactor -= Step

YES

QP

**Fig. 3**

Europäisches
Patentamt

European
Patent Office

Office européen
des brevets

# EUROPEAN SEARCH REPORT

Application Number

EP 08 30 5972

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WESTERINK P H ET AL: "Two-pass MPEG-2 variable-bit-rate encoding" IBM JOURNAL OF RESEARCH AND DEVELOPMENT, INTERNATIONAL BUSINESS MACHINES CORPORATION, NEW YORK, NY, US, vol. 43, no. 4, 4 July 1999 (1999-07-04), pages 471-488, XP002395114 ISSN: 0018-8646 * abstract * | 1-9 | INV. H04N7/26 |
| A | ZHIHAI HE ET AL: "Lowpass filtering of rate-distortion functions for quality smoothing for real-time video recording and streaming" IMAGE PROCESSING, 2004. ICIP '04. 2004 INTERNATIONAL CONFERENCE ON SINGAPORE 24-27 OCT. 2004, PISCATAWAY, NJ, USA,IEEE, vol. 2, 24 October 2004 (2004-10-24), pages 1101-1104, XP010785199 ISBN: 978-0-7803-8554-2 * abstract * | 1-9 | |
| A | US 2005/226321 A1 (CHEN YI-KAI [TW]) 13 October 2005 (2005-10-13) * abstract * | 1-9 | TECHNICAL FIELDS SEARCHED (IPC) H04N |
| A | US 2007/064793 A1 (WANG HAOHONG [US] ET AL) 22 March 2007 (2007-03-22) * abstract * | 1-9 | |
| A | WO 2006/067373 A (BRITISH TELECOMM [GB]; KAMARIOTIS OTHON [GR]; TURNBULL RORY STEWART [G) 29 June 2006 (2006-06-29) * figure 1 * | 1-9 | |

-/--

The present search report has been drawn up for all claims

| Place of search | Date of completion of the search | Examiner |
|---|---|---|
| Munich | 15 May 2009 | Oelbaum, Tobias |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## EUROPEAN SEARCH REPORT

Application Number

EP 08 30 5972

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PAI C-Y ET AL: "MPEG-4 constant-quality constant-bit-rate control algorithms" SIGNAL PROCESSING. IMAGE COMMUNICATION, ELSEVIER SCIENCE PUBLISHERS, AMSTERDAM, NL, vol. 21, no. 1, 1 January 2006 (2006-01-01), pages 67-89, XP025080465 ISSN: 0923-5965 [retrieved on 2006-01-01] * abstract * | 1-9 | |
| A | CHENGSHENG QUE ET AL: "An Efficient Two-Pass VBR Encoding Algorithm for H.264" COMMUNICATIONS, CIRCUITS AND SYSTEMS PROCEEDINGS, 2006 INTERNATIONAL CONFERENCE ON, IEEE, PI, 1 June 2006 (2006-06-01), pages 118-122, XP031010394 ISBN: 978-0-7803-9584-8 * abstract * | 1-9 | |

TECHNICAL FIELDS SEARCHED (IPC)

The present search report has been drawn up for all claims

| Place of search | Date of completion of the search | Examiner |
|---|---|---|
| Munich | 15 May 2009 | Oelbaum, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 30 5972

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2009

| Patent document cited in search report | | Publication date | Patent family member(s) | | Publication date |
|---|---|---|---|---|---|
| US 2005226321 | A1 | 13-10-2005 | JP 2005294977 A<br>TW 249957 B | | 20-10-2005<br>21-02-2006 |
| US 2007064793 | A1 | 22-03-2007 | EP 1949699 A1<br>JP 2009509476 T<br>KR 20080066684 A<br>WO 2007038230 A1 | | 30-07-2008<br>05-03-2009<br>16-07-2008<br>05-04-2007 |
| WO 2006067373 | A | 29-06-2006 | CN 101084676 A<br>EP 1829374 A1<br>US 2008137735 A1 | | 05-12-2007<br>05-09-2007<br>12-06-2008 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. Ribas-Corbera et al.** A generalized hypothetical reference decoder for H.264/AVC. *IEEE Transactions on Circuits and Systems for Video Technology,* July 2003

- Proposed Draft of Adaptive Rate Control. *Doc. JVT-H017,* 20 May 2003